# EUROPÄISCHE PATENTSCHRIFT

(11) **EP 3 376 575 B1**
(45) Veröffentlichungstag und Bekanntmachung des Hinweises auf die Patenterteilung: **29.04.2020**
(21) Anmeldenummer: 18157867.5
(22) Anmeldetag: 21.02.2018
(51) Int. Cl.: H01M 8/0206, H01M 8/021, H01M 8/0247, H01M 8/0258, H01M 8/0254, H01M 8/124

(54) **VERFAHREN ZUR HERSTELLUNG EINES METALLISCHEN INTERKONNEKTORS FÜR EINEN BRENNSTOFFZELLENSTAPEL, SOWIE EIN NACH DEM VERFAHREN HERGESTELLTER METALLISCHER INTERKONNEKTOR**
METHOD FOR PRODUCING A METALLIC INTERCONNECTOR FOR A FUEL CELL STACK, AND METALLIC INTERCONNECTOR MADE USING THE METHOD
PROCÉDÉ DE FABRICATION D'UN INTERCONNECTEUR MÉTALLIQUE POUR UN EMPILEMENT DE PILES À COMBUSTIBLE, INTERCONNECTEUR MÉTALLIQUE FABRIQUÉ SELON LE PROCÉDÉ

(30) Priorität: 16.03.2017 EP 17161348
(43) Veröffentlichungstag der Anmeldung: 19.09.2018
(73) Patentinhaber: Hexis AG, 8404 Winterthur (CH)
(72) Erfinder: Mai, Andreas, Dr., 78462 Konstanz (DE); Denzler, Roland, 8484 Weisslingen (CH); Fleischhauer, Felix, Dr., 8006 Zürich (CH)
(74) Vertreter: Intellectual Property Services GmbH

(56) Entgegenhaltungen:
- EP-A1- 1 445 814
- EP-A1- 1 887 643
- EP-A1- 1 986 259
- DE-A1-102010 035 254

## Beschreibung

Die Erfindung betrifft ein Verfahren zur Herstellung eines metallischen Interkonnektors für einen Brennstoffzellenstapel. Zudem betrifft die Erfindung einen metallischen Interkonnektor, der nach dem Verfahren herstellbar ist. Schließlich betrifft die Erfindung einen Brennstoffzellenstapel mit einem nach dem Verfahren herstellbaren metallischen Interkonnektor.

Metallische Interkonnektoren sind ein wichtiger Bestandteil von Hochtemperatur-Brennstoffzellenstapeln. Die Aufgaben der Interkonnektoren sind die elektrische Kontaktierung der Brennstoffzelle sowie die Zuführung der Reaktionsgase. Zur Zuführung der Reaktionsgase weisen die Interkonnektoren eine Luftleitfläche mit einer ersten Gasverteilerstruktur und eine Brenngasleitfläche mit einer zweiten Gasverteilerstruktur auf. Über die erste Gasverteilerstruktur wird die Kathode der Brennstoffzelle mit Luft und über die zweite Gasverteilerstruktur die Anode der Brennstoffzelle mit Brenngasen versorgt.

In derzeitigen Hochtemperatur-Brennstoffzellenstapeln kommen überwiegend Interkonnektoren zur Anwendung, die basierend auf Blechumformung bzw. pulvermetallurgischen Verfahren hergestellt sind:
1.) Herstellung durch Blechumformung: Hierbei werden planare Metallbleche, üblicherweise Metallbleche aus ferritischen Chromstählen, umgeformt. Derartig hergestellte Interkonnektoren, die beispielsweise aus der EP 1 278 258 B1 hervorgehen, weisen dabei die Form eines Wellblechs auf. D.h die erste Gasverteilerstruktur und die zweite Gasverteilerstruktur weisen jeweils Berge und Täler auf, die komplementär zueinander angeordnet sind. Ein wesentlicher Vorteil der durch Blechumformung angefertigten Interkonnektoren liegt in ihrer einfachen und kostengünstigen Herstellung. Ein wesentlicher Nachteil dieser so gefertigten Interkonnektoren besteht jedoch darin, dass sie aufgrund ihrer relativ geringen Dicke (<1,5 mm), welche durch das Blechumformungsverfahren vorgegeben ist, eine kürzere Lebensdauer aufweisen. Zudem können über die Blechumformung an den Interkonnektoren keine Dichtflächen erzeugt werden, da für solche Flächen von einer Wellblechstruktur abgewichen werden muss. Die Dichtflächen müssen somit in einem weiteren Verfahrensschritt, z.B durch Schweissen an der Luftleitfläche und der Brenngasleitfläche angebracht werden.
2.) Herstellung durch abspanende Verfahren: Hierbei können dickere Metallbleche als Ausgangsmaterial eingesetzt werden, da die erste Gasverteilerstruktur und die zweite Gasverteilerstruktur durch z.B Fräsen in die Luftleifläche bzw. Brenngasleitfläche eingebracht sind. Ein derartiger Interkonnektor geht beispielsweise aus der DE 101 26 723 A1 hervor. Die so hergestellten Interkonnektoren weisen aufgrund ihrer Dicke (>1,5 mm) eine hohe mechanische Stabilität und Korrosionsbeständigkeit, und somit eine höhere Lebensdauer auf. Auch können durch dieses Herstellungsverfahren die Interkonnektoren einfach mit Dichtflächen versehen werden. Die Herstellung dieser mechanisch bearbeiteten Interkonnektoren ist jedoch zeitaufwändig und die Materialausnutzung wird durch den Materialabtrag reduziert. Hierdurch wird diese Art von Interkonnektor vergleichsweise teuer in ihrer Herstellung.
3.) Herstellung durch pulvermetallurgische Verfahren: Alternativ sind auch Interkonnektoren bekannt, die mittels pulvermetallurgischen Verfahren hergestellt sind. Solche Interkonnektoren, die beispielsweise aus der EP 1 075 033 B1 und der EP 1 268 868 B1 hervorgehen, haben unter anderem aufgrund ihrer Dicke (>1,5 mm) eine hohe mechanische Stabilität und Korrosionsbeständigkeit, und haben sich somit für den Einsatz in einer Hochtemperatur-Brennstoffzelle als vorteilhaft erwiesen. Auch können bei diesem Herstellungsverfahren die Interkonnektoren einfach mit Dichtflächen versehen werden. Jedoch sind auch pulvermetallurgisch hergestellte Interkonnektoren teuer.

Ausserdem sind im Stand der Technik aus der EP 1 887 643 A1 und der EP 1 986 259 A1 Deformationsverfahren bekannt, bei welchem Stege und Rillen eines Interkonnektors in einer wellblechartigen Form erzeugt werden. Aus der EP 1 445 814 A1 hingegen ist ein Verfahren bekannt, bei dem Oberflächenstrukturen bei einem Interkonnektor über verätzen der Oberfläche erzeugt werden.

Da die Interkonnektoren für einen wesentlichen Kostenanteil des Brennstoffzellenheizgeräts verantwortlich sind, werden enorme Bestrebungen unternommen, um die Herstellungskosten der Interkonnektoren und damit der Brennstoffzellenstapel zu senken.

Die Aufgabe der Erfindung wird daher darin gesehen, ein einfaches und günstiges Verfahren zur Herstellung eines metallischen Interkonnektors und einen einfach und günstig hergestellten metallischen Interkonnektor bzw. Brennstoffzellenstapel vorzuschlagen, bei welchem ein Blechrohling als Ausgangsmaterial verwendet wird, Dichtflächen einfach herstellbar sind, und der durch das Verfahren hergestellte metallische Interkonnektor eine hohe Lebensdauer aufweist.

Die Aufgabe wird erfindungsgemäß durch ein Verfahren zur Herstellung eines metallischen Interkonnektors gemäß Anspruch 1, durch einen metallischen Interkonnektor gemäß Anspruch 13 sowie durch einen Brennstoffzellenstapel gemäß Anspruch 14 gelöst.

Die abhängigen Ansprüche 2 bis 12 beziehen sich auf besonders vorteilhafte Ausführungsformen der Erfindung.

Die Erfindung betrifft somit ein Verfahren zur Herstellung eines metallischen Interkonnektors für einen Brennstoffzellenstapel, welcher eine Luftleitfläche mit einer ersten Gasverteilerstruktur und eine Brenngasleitfläche mit einer zweiten Gasverteilerstruktur aufweist. Die erste Gasverteilerstruktur und die zweite Gasverteilerstruktur sind jeweils durch Rillen und Stege gebildet, und das Verfahren umfasst die folgenden Schritte:
- Bereitstellen eines Blechrohlings, wobei die Dicke des Blechrohlings 0,5 bis 3,5 mm beträgt,
- Umformen des Blechrohlings durch ein plastisches Formverfahren, wobei die erste Gasverteilerstruktur und die zweite Gasverteilerstruktur derart ausgebildet werden, dass an einem vorgebbaren Flächenanteil der Luftleitfläche und der Brenngasleitfläche von mindestens 75% und höchstens 99% die Rillen und Stege der ersten Gasverteilerstruktur komplementär zu den Rillen und Stegen der zweiten Gasverteilerstruktur angeordnet werden, wobei der metallische Interkonnektor einen Kern umfasst und eine Dicke des Interkonnektors eine Summe einer Dicke des Kerns und einer Steghöhe der ersten Gasverteilerstruktur und einer Steghöhe der zweiten Gasverteilerstruktur ist, wobei der Interkonnektor eine Dichtfläche umfasst, welche Dichtfläche sowohl an der Luftleitfläche und der Brenngasleitfläche angeordnet ist.

Im Rahmen dieser Erfindung können unter einem plastischen Formverfahren beispielsweise die folgenden Umformverfahren verstanden werden: Massivprägen, Druckumformung gemäss DIN 8583, insbesondere Zugdruckumformung gemäss DIN 8584, uniaxiales Pressen, Taumelpressen, oder ein anderes geeignetes Pressverfahren auch in Kombination mit einem anschliessenden Kalibrierpressen. Während des plastischen Formverfahrens wird die Dicke des Blechrohlings in manchen Bereichen infolge Werkstoffwanderung vergrössert und in anderen Bereichen reduziert. D.h der mittels des plastischen Formverfahrens hergestellte Interkonnektor weist sowohl Bereiche auf, in denen die Dicke des Interkonnektors grösser ist als die Dicke des Blechrohlings, wie auch Bereiche, in denen die Dicke des Interkonnektors kleiner ist als die Dicke des

Blechrohlings. Dies im Unterschied zum Stand der Technik, wo während des Blechumformens die Dicke des Blechrohlings durchgehend reduziert wird, d.h der mittels des Blechumformens hergestellte Interkonnektor weist eine Dicke auf, die durchgehend geringer ist als die Dicke des Blechrohlings.

Zudem werden im Rahmen dieser Erfindung die erste Gasverteilerstruktur und die zweite Gasverteilerstruktur derart ausgebildet, dass an einem vorgebbaren Flächenanteil der Luftleitfläche und der Brenngasleitfläche von mindestens 75% und höchstens 99% die Rillen und Stege der ersten Gasverteilerstruktur komplementär zu den Rillen und Stegen der zweiten Gasverteilerstruktur angeordnet sind. Unter dem Begriff "komplementär" ist zu verstehen, dass ein Steg der ersten Gasverteilerstruktur und eine Rille der zweiten Gasverteilerstruktur bzw. eine Rille der ersten Gasverteilerstruktur und ein Steg der zweiten Gasverteilerstruktur in einer gemeinsamen Ebene liegen, die senkrecht zu der Luftleitfläche bzw. der Brenngasleitfläche verläuft. D.h im Rahmen der Erfindung werden an einem Flächenanteil von mindestens 1% der Luftleitfläche und der Brenngasleitfläche die erste Gasverteilerstruktur und die zweite Gasverteilerstruktur derart ausgebildet, dass die Rillen und Stege der ersten Gasverteilerstruktur nicht komplementär zu den Rillen und Stegen der zweiten Gasverteilerstruktur angeordnet sind. Dies im Unterschied zum Stand der Technik, wo mittels der Blechumformung die Rillen und Stege der ersten Gasverteilerstruktur vollständig komplementär zu den Rillen und Stegen der zweiten Gasverteilerstruktur angeordnet werden.

Des Weiteren wird im Rahmen dieser Erfindung unter dem Begriff "Steg" eine längliche in Verlaufsrichtung durchgehende oder unterbrochene Erhebung verstanden. Auch kann der "Steg" kreisförmig als eine Kuppe bzw. Noppe ausgebildet sein. Zudem kann der Blechrohling im Rahmen dieser Erfindung rund, z.B als eine Kreisscheibe, oder auch eckig, z.B als eine rechteckige Platte, ausgebildet sein.

Ein wesentlicher Vorteil des erfindungsgemässen Verfahrens besteht darin, dass Blechrohlinge mit einer erhöhten Dicke (>1,5 mm) einfach zu Interkonnektoren verarbeitet werden können. Es lassen sich somit kostengünstig Interkonnektoren herstellen, die eine hohe Lebensdauer aufweisen. Die Herstellung der Interkonnektoren kann dabei mittels herkömmlichen Presskräften, wie sie auch bei der Blechumformung verwendet werden, erzielt werden. Die Interkonnektoren lassen sich dadurch mit herkömmlichen Werkzeugen, d.h ohne den Einsatz von Spezialwerkzeugen, herstellen. Ein weiterer Vorteil des erfindungsgemässen Verfahrens ist, dass an den Interkonnektoren direkt im Zuge des Umformprozesses Dichtflächen ausgebildet werden können.

In einem für die Praxis sehr wichtigen Ausführungsbeispiel beträgt der Flächenanteil der Luftfläche und der Brenngasfläche, bei dem die Rillen und Stege der ersten Gasverteilerstruktur und die Rillen und Stege der zweiten Gasverteilerstruktur komplementär ausgebildet werden 75 bis 98%, bevorzugt 75 bis 95%, besonders bevorzugt 75 bis 90%. Hierdurch ist es möglich, lokal begrenzte Überlappungen für Dichtflächen optimal auszubilden.

Als vorteilhaft hat es sich auch erwiesen, wenn der Interkonnektor als eine Ringscheibe mit einer Scheibenachse und einer zu der Scheibenachse konzentrischen Öffnung ausgebildet ist. Die zweite Gasverteilerstruktur weist dabei eine erste zu der Scheibenachse konzentrische Ringfläche und eine zweite zu der Scheibenachse konzentrische Ringfläche auf, wobei die erste Ringfläche und die zweite Ringfläche durch eine Ringrille voneinander getrennt sind. Zudem weist die zweite Gasverteilerstruktur wenigstens eine zur Scheibenachse radiale Richtung auf, wobei die erste Ringfläche und die zweite Ringfläche jeweils wenigstens einen ersten Radialsteg aufweisen, der sich entlang der radialen Richtung erstreckt. Auch können die erste Ringfläche und die zweite Ringfläche jeweils wenigstens eine erste Radialrille aufweisen, die sich entlang der radialen Richtung erstreckt. Aufgrund der Ausgestaltung des Interkonnektors als eine Ringscheibe, ist es möglich, den Interkonnektor mit kurzen Dichtflächen zu versehen. Zudem wird mittels des ersten Radialstegs bzw. der ersten Radialrille eine verbesserte Strömung des Brenngases an der Brenngasleitfläche erzielt. Auch kann durch den ersten Radialsteg bzw. die erste Radialrille das Brenngas direkt hinter die Dichtflächen geführt werden, was sich positiv auf eine homogene Brenngasversorgung auswirkt.

Weiter ist es von Vorteil, wenn die erste Ringfläche und die zweite Ringfläche jeweils wenigstens einen zweiten Radialsteg aufweist, der sich parallel zu dem ersten Radialsteg erstreckt. Auch kann die erste Ringfläche und die zweite Ringfläche jeweils wenigstens eine zweite Radialrille aufweisen, die sich parallel zu der ersten Radialrille erstreckt. Mittels des zweiten Radialstegs bzw. der zweiten Radialrille kann die Strömung des Brenngases an der Brenngasleitfläche weiter verbessert werden.

In der Praxis hat es sich zudem als vorteilhaft herausgestellt, wenn der Blechrohling aus einem ferritischen Stahl mit der Wst.-Nr. 1.4760, insbesondere einem ferritischen Stahl mit der Wst.-Nr. 1.4509 oder einem ferritischen Stahl mit 8% ≤ Chrom ≤ 40%, insbesondere 22 % Chrom, 0,05% ≤ Mangan ≤ 20%, und 40% ≤ Eisen ≤ 91,95% ist. Aufgrund dieser Materialien wird eine verringerte Bildung von Chromoxid an der Luftleitfläche und der Brenngasleifläche erzielt, was eine verringerte Kontaminierung der Einzelzellen, insbesondere der Kathoden, zur Folge hat. Die Lebensdauer des Interkonnektors kann hierdurch verlängert werden.

Des Weiteren ist es von Vorteil, wenn der Aussendurchmesser des Blechrohlings 50 bis 250 mm, insbesondere 70 bis 200 mm, 90 bis 140 mm, besonders bevorzugt 120 mm, beträgt. Dies wirkt sich positiv auf die Grösse des Bauraums aus, welcher für den Brennstoffzellenstapel benötigt wird.

Erfindungsgemäß beträgt die Dicke des Blechrohlings 0,5 bis 3,5 mm, insbesondere 1,5 bis 2,5 mm. Dies wirkt sich positiv auf die Lebensdauer des Interkonnektors aus.

Auch ist es vorteilhaft, wenn die Breite der Rillen 0,5 bis 2 mm, insbesondere 1 mm, beträgt.

In der Praxis hat es sich als vorteilhaft erwiesen, wenn als Blechrohling ein mehrschichtiger Blechrohling verwendet wird. Der Blechrohling kann sich beispielsweise aus Schichten unterschiedlichen Materials zusammensetzen. So kann der Blechrohling eine erste und eine zweite Schicht aufweisen, die aus demselben Material sind und in welche jeweils die erste und die zweite Gasverteilerstruktur eingebracht werden. Darüber hinaus kann der Blechrohling eine weitere Schicht aus einem anderen Material aufweisen, der die erste und die zweite Schicht voneinander trennt.

Auch ist es von Vorteil, wenn der Blechrohling an seinem Umfang ein Orientierungselement in Form einer Erhöhung aufweist, die bevorzugt senkrecht zu einer Umfangslinie des Blechrohlings verläuft. Aufgrund des Orientierungselements kann die Orientierung des Interkonnektors im Presswerkzeug einfach festgestellt werden. Das Orientierungselement kann bereits ein Bestandteil des Blechrohlings sein oder während des Umformens in den Blechrohling eingebracht werden.

Die vorliegende Erfindung betrifft weiter einen metallischen Interkonnektor für einen Brennstoffzellenstapel nach Anspruch 13, wobei der Interkonnektor aus einem Blechrohling nach einem Verfahren nach einem der Ansprüche 1 bis 12 hergestellt ist. Der Interkonnektor weist eine Luftleitfläche mit einer ersten Gasverteilerstruktur und eine Brenngasleitfläche mit einer zweiten Gasverteilerstruktur auf, wobei die erste Gasverteilerstruktur und die zweite Gasverteilerstruktur jeweils durch Rillen und Stege gebildet sind, und an einem vorgebbaren Flächenanteil der Luftleitfläche und der Brenngasleitfläche von mindestens 75% und höchstens 99% die Rillen und Stege der ersten Gasverteilerstruktur komplementär zu den Rillen und Stegen der zweiten Gasverteilerstruktur angeordnet sind.

Schliesslich betrifft die vorliegende Erfindung einen Brennnstoffzellenstapel mit einem metallischen Interkonnektor nach Anspruch 14.

Im Folgenden wird die Erfindung anhand der schematischen Zeichnungen näher erläutert. Es zeigen:
- Fig. 1: eine Brennngasleitfläche eines erfindungsgemässen Interkonnektors,
- Fig. 2: eine Luftleitfläche des Interkonnektors nach Fig.1,
- Fig.3: eine Teilseitenansicht X gemäss Fig.1 und
- Fig.4: eine Teilseitenansicht Y gemäss Fig.1.

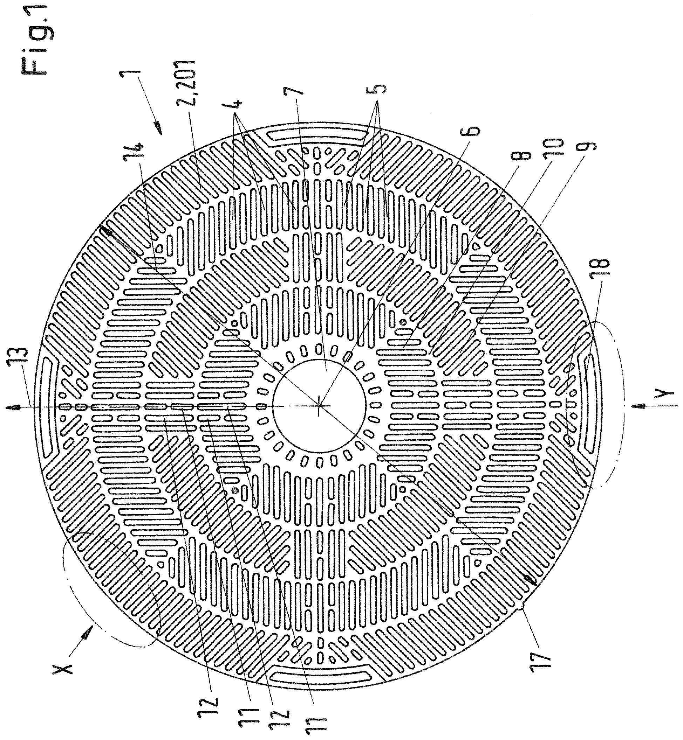

Fig.1 zeigt eine Brenngasleitfläche 2 eines erfindungsgemässen Interkonnektors 1 der nach dem erfindungsgemässen Verfahren hergestellt ist. Der Interkonnektor 1 ist in Form einer Ringescheibe mit einer Scheibenachse 6 und einer zur Scheibenachse 6 konzentrischen Öffnung 7 ausgebildet. Die Ringscheibe hat einen Aussendurchmesser 14 von 120 mm. Die Brenngasleifläche 2 weist eine erste Gasverteilerstruktur 201 auf, die durch Stege 4 und Rillen 5 gebildet ist. Die Stege 4 haben die Form von länglichen Erhöhungen und bilden zwischen sich Rillen 5. Zudem weist die erste Gasverteilerstruktur 201 eine erste Ringfläche 8 und eine zweite Ringfläche 9 auf, die jeweils konzentrisch zur Scheibenachse 6 angeordnet sind und durch eine Ringrille 10 voneinander getrennt sind. Auf der ersten Ringfläche 8 und der zweiten Ringfläche 9 ist jeweils ein erster Radialsteg 11 angeordnet, der sich in einer radialen Richtung 13 der Ringscheibe erstreckt. Zudem ist auf der ersten Ringfläche 8 und der zweiten Ringfläche 9 jeweils ein zweiter Radialsteg 12 angeordnet, welcher parallel zum ersten Radialsteg 11 verläuft. Analog zu der in Fig.1 gezeigten Ausführungsform ist in einer weiteren nicht dargestellten Ausführungsform auf der ersten Ringfläche 8 und der zweiten Ringfläche 9 jeweils eine erste Radialrille angeordnet, die sich in der radialen Richtung 13 der Ringscheibe erstreckt. Zudem ist auf der ersten Ringfläche 8 und der zweiten Ringfläche 9 jeweils eine zweite Radialrille angeordnet, welche parallel zur ersten Radialrille verläuft.

Die Ringscheibe ist zudem an ihrem Umfang mit einem Orientierungselement 17 in Form einer Erhöhung versehen. Das Orientierungselement 17 unterstützt die Positionierung bzw. die Orientierung des Interkonnektors 1 im Presswerkzeug. Auch weist die Brenngastleifläche 201 ein Dichtungselement 18 auf.

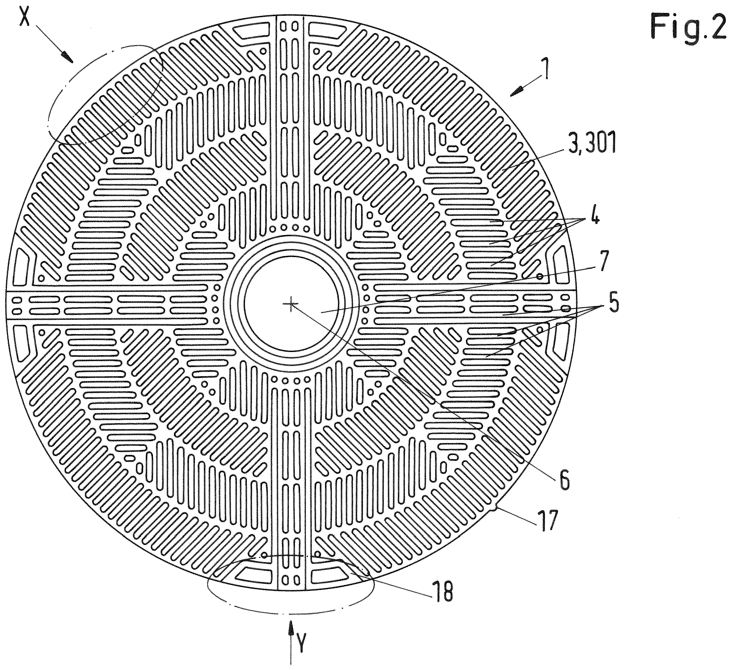

Fig. 2 zeigt eine Luftleitfläche 3 des Interkonnektors 1 nach Fig.1. Die Luftleitfläche 3 weist analog zur Brenngasleitfläche 2 eine erste Gasverteilerstruktur 301 auf, die durch Stege 4 und Rillen 5 gebildet ist. Die Stege 4 haben ebenfalls die Form von länglichen Erhöhungen und bilden zwischen sich Rillen 5. Auch die Luftleifläche 3 weist ein Dichtungselement 18 auf.

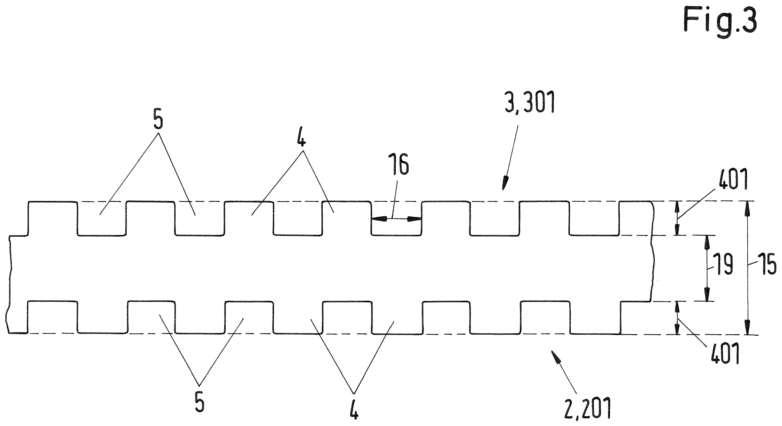

Fig. 3 zeigt eine Teilseitenansicht X gemäss Fig.1. Anhand dieser Ansicht wird deutlich, dass an einem vorgebbaren Flächenanteil der Luftleitfläche 3 und der Brenngasleitfläche 2 die Rillen 5 und Stege 4 der ersten Gasverteilerstruktur 301 komplementär zu den Rillen 5 und Stegen 4 der zweiten Gasverteilerstruktur 201 angeordnet sind. D.h ein Steg 4 der ersten Gasverteilerstruktur 301 und eine Rille 5 der zweiten Gasverteilerstruktur 201 bzw. eine Rille 5 der ersten Gasverteilerstruktur 301 und ein Steg 4 der zweiten Gasverteilerstruktur 201 liegen in einer gemeinsamen Ebene, die senkrecht zu der Luftleitfläche 3 bzw. der Brenngasleitfläche 2 verläuft.

Zudem geht aus der Ansicht hervor, dass die Stege 4 der ersten Gasverteilerstruktur 301 eine gleiche Steghöhe 401 aufweisen und die Stege 4 der zweiten Gasverteilerstruktur 201 eine gleiche Steghöhe 401 aufweisen. Die Dicke des Interkonnektors 1 ist die Summe der Dicke des Kerns 19 und der Steghöhe 401 der ersten Gasverteilerstruktur 301 und der Steghöhe 401 der zweiten Gasverteilerstruktur 201. Die Breite 16 der Rillen 5, d.h der Abstand zweier benachbarter Stege 4 beträgt 1 mm.

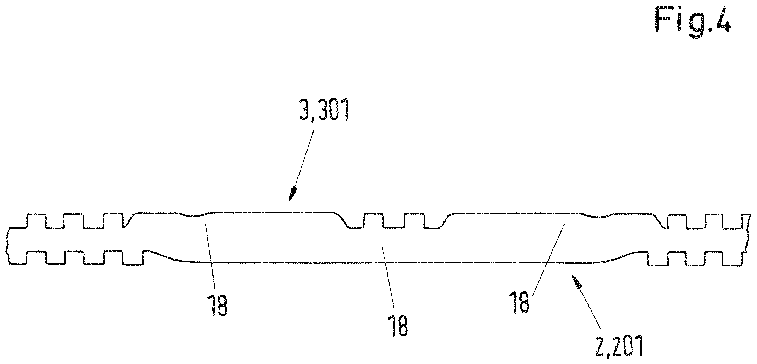

Fig.4 zeigt eine Teilseitenansicht Y gemäss Fig.1. In dieser ist eine Dichtfläche 18 dargestellt, die sowohl an der Luftleitfläche 3 und der Brenngasleitfläche 2 angeordnet ist. Im Gegensatz zu der komplementären Anordnung gemäss Fig. 3 sind im Bereich der Dichtfläche 18 die Rillen und Stege der ersten Gasverteilerstruktur 301 zu den Rillen und Stegen der zweiten Gasverteilerstruktur 201 nicht komplementär angeordnet. Vielmehr liegen sich hier Stege der ersten Gasverteilerstruktur 301 und Stege der zweiten Gasverteilerstruktur 201 bzw. Rillen der ersten Gasverteilerstruktur 301 und Rillen der zweiten Gasverteilerstruktur 201 gegenüber.

In diesem Ausführungsbeispiel (Fig1 bis Fig.4) beträgt der Flächenanteil der Luftleitfläche 3 und der Brenngasleitfläche 2, bei welchem die Rillen 5 und Stege 4 der ersten Gasverteilerstruktur 301 komplementär zu den Rillen 5 und Stegen 4 der zweiten Gasverteilerstruktur 201 angeordnet sind ungefähr 98%.

### Herstellungsbeispiel :

Zur Herstellung eines scheibenförmigen, metallischen Interkonnektors umfassend eine Luftleitfläche mit einer ersten Gasverteilerstruktur und eine Brenngasleitfläche mit einer zweiten Gasverteilerstruktur wurde ein runder Blechrohling aus dem Stahl mit der Wst.Nr. 1.4760 mit einem Aussendurchmesser von 120 mm und einer Dicke von 2,5 mm in eine Prägepresse mit geteilten Pressstempeln, die auf die spezielle Form der ersten Gasverteilerstruktur und der zweiten Gasverteilerstruktur abgestimmt waren, eingebracht.

Der Blechrohling wurde dann unter einem Pressdruck von 1000 kN/cm2 bei Raumtemperatur massivgeprägt, wobei die erste Gasverteilerstruktur und die zweite Gasverteilerstruktur derart ausgebildet wurden, dass an einem Flächenanteil von 98% der Luftleitfläche und der Brenngasleitfläche die Rillen und Stege der ersten Gasverteilerstruktur komplementär zu den Rillen und Stegen der zweiten Gasverteilerstruktur angeordnet wurden.

Nach dem Massivprägen erfolgte der Ausstoss des Interkonnektors aus der Prägepresse.

## Patentansprüche

1. Verfahren zur Herstellung eines metallischen Interkonnektors (1) für einen Brennstoffzellenstapel, welcher eine Luftleitfläche (3) mit einer ersten Gasverteilerstruktur (301) und eine Brenngasleitfläche (2) mit einer zweiten Gasverteilerstruktur (201) aufweist, wobei die erste Gasverteilerstruktur (301) und die zweite Gasverteilerstruktur (201) jeweils durch Rillen (5) und Stege (4) gebildet sind, und das Verfahren die folgenden Schritte umfasst
• Bereitstellen eines Blechrohlings, wobei die Dicke des Blechrohlings 0,5 bis 3,5 mm beträgt,
• Umformen des Blechrohlings durch ein plastisches Formverfahren, wobei die erste Gasverteilerstruktur (301) und die zweite Gasverteilerstruktur (201) derart ausgebildet werden, dass an einem vorgebbaren Flächenanteil der Luftleitfläche (3) und der Brenngasleitfläche (2) von mindestens 75% und höchstens 99% die Rillen (5) und Stege (4) der ersten Gasverteilerstruktur (301) komplementär zu den Rillen (5) und Stegen (4) der zweiten Gasverteilerstruktur (201) angeordnet werden, wobei der metallische Interkonnektor einen Kern (19) umfasst und eine Dicke des Interkonnektors (1) eine Summe einer Dicke des Kerns (19) und einer Steghöhe (401) der ersten Gasverteilerstruktur (301) und einer Steghöhe (401) der zweiten Gasverteilerstruktur (201) ist, wobei der Interkonnektor (1) eine Dichtfläche (18) umfasst, welche Dichtfläche (18) sowohl an der Luftleitfläche (3) und der Brenngasleitfläche (2) angeordnet ist.

2. Verfahren nach Anspruch 1, wobei der Flächenanteil der Luftleitfläche (3) und der Brenngasleitfläche (2), bei dem die Rillen (5) und Stege (4) der ersten Gasverteilerstruktur (301) und die Rillen (5) und Stege (4) der zweiten Gasverteilerstruktur (201) komplementär ausgebildet werden, 75 bis 98%, bevorzugt 75 bis 95%, besonders bevorzugt 75 bis 90% beträgt.

3. Verfahren nach Anspruch 1 oder 2, wobei der Interkonnektor (1) als eine Ringscheibe mit einer Scheibenachse (6) und einer zu der Scheibenachse (6) konzentrischen Öffnung (7) ausgebildet ist, und die zweite Gasverteilerstruktur (201) eine erste zu der Scheibenachse (6) konzentrische Ringfläche (8) und eine zweite zu der Scheibenachse (6) konzentrische Ringfläche (9) aufweist, wobei die erste Ringfläche (8) und die zweite Ringfläche (9) durch eine Ringrille (10) voneinander getrennt sind, und die zweite Gasverteilerstruktur (201) wenigstens eine zur Scheibenachse (6) radiale Richtung (13) aufweist, wobei die erste Ringfläche (8) und die zweite Ringfläche (9) jeweils wenigstens einen ersten Radialsteg (11) aufweisen, der sich entlang der radialen Richtung (13) erstreckt.

4. Verfahren nach Anspruch 3, wobei die erste Ringfläche (8) und die zweite Ringfläche (9) jeweils wenigstens einen zweiten Radialsteg (12) aufweist, der sich parallel zu dem ersten Radialsteg (11) erstreckt.

5. Verfahren nach einem der Ansprüche 1 bis 4, wobei der Interkonnektor (1) als eine Ringscheibe mit einer Scheibenachse (6) und einer zu der Scheibenachse (6) konzentrischen Öffnung (7) ausgebildet ist, und die zweite Gasverteilerstruktur (201) eine erste zu der Scheibenachse (6) konzentrische Ringfläche (8) und eine zweite zu der Scheibenachse (6) konzentrischen Ringfläche (9) aufweist, wobei die erste Ringfläche (8) und die zweite Ringfläche (9) durch eine Ringrille (10) voneinander getrennt sind, und die zweite Gasverteilerstruktur (201) wenigstens eine zur Scheibenachse (6) radiale Richtung (13) aufweist, und die erste Ringfläche (8) und die zweite Ringfläche (9) jeweils wenigstens eine erste Radialrille aufweisen, die sich entlang der radialen Richtung (13) erstreckt.

6. Verfahren nach Anspruch 5, wobei die erste Ringfläche (8) und die zweite Ringfläche (9) jeweils wenigstens eine zweite Radialrille aufweist, die sich parallel zu der ersten Radialrille erstreckt.

7. Verfahren nach einem der Ansprüche 1 bis 6, wobei der Blechrohling aus einem ferritischen Stahl mit 8% ≤ Chrom ≤ 40%, insbesondere 22 % Chrom, 0,05% ≤ Mangan ≤ 20%, und 40% ≤ Eisen ≤ 91,95% ist.

8. Verfahren nach einem der Ansprüche 1 bis 7, wobei der Aussendurchmesser (14) des Blechrohlings 50 bis 250 mm, bevorzugt 70 bis 200 mm, besonders bevorzugt 90 bis 140 mm, insbesondere 120 mm, beträgt.

9. Verfahren nach einem der Ansprüche 1 bis 8, wobei die Dicke des Blechrohlings 1,5 bis 2,5 mm, beträgt.

10. Verfahren nach einem der Ansprüche 1 bis 9, wobei die Breite (16) der Rillen (5) 0,5 bis 2 mm, insbesondere 1 mm, beträgt.

11. Verfahren nach einem der Ansprüche 1 bis 10, wobei als Blechrohling ein mehrschichtiger Blechrohling verwendet wird.

12. Verfahren nach einem der Ansprüche 1 bis 11, wobei der Blechrohling an seinem Umfang ein Orientierungselement (17) in Form einer Erhöhung aufweist, die bevorzugt senkrecht zu einer Umfangslinie des Blechrohlings verläuft.

13. Metallischer Interkonnektor (1) für einen Brennstoffzellenstapel, wobei der Interkonnektor (1) aus einem Blechrohling nach einem Verfahren nach einem der Ansprüche 1 bis 12 hergestellt ist, und der Interkonnektor (1) eine Luftleitfläche (3) mit einer ersten Gasverteilerstruktur (301) und eine Brenngasleitfläche (2) mit einer zweiten Gasverteilerstruktur (201) aufweist, wobei die erste Gasverteilerstruktur (301) und die zweite Gasverteilerstruktur (201) jeweils durch Rillen (5) und Stege (4) gebildet sind, und an einem vorgebbaren Flächenanteil der Luftleitfläche (3) und der Brenngasleitfläche (2) von mindestens 75% und höchstens 99% die Rillen (5) und Stege (4) der ersten Gasverteilerstruktur (301) komplementär zu den Rillen (5) und Stegen (4) der zweiten Gasverteilerstruktur (201) angeordnet sind, wobei der metallische Interkonnektor einen Kern (19) umfasst und eine Dicke des Interkonnektors (1) eine Summe einer Dicke des Kerns (19) und einer Steghöhe (401) der ersten Gasverteilerstruktur (301) und einer Steghöhe (401) der zweiten Gasverteilerstruktur (201) ist, wobei der Interkonnektor (1) eine Dichtfläche (18) umfasst, welche Dichtfläche (18) sowohl an der Luftleitfläche (3) und der Brenngasleitfläche (2) angeordnet ist.

14. Brennnstoffzellenstapel mit einem metallischen Interkonnektor (1) nach Anspruch 13.

## Claims

1. A method for producing a metallic interconnector (1) for a fuel cell stack, which has an air guiding surface (3) with a first gas distributor structure (301) and a fuel gas guiding surface (2) with a second gas distributor structure (201), wherein the first gas distributor structure (301) and the second gas distributor structure (201) are each formed by grooves (5) and webs (4), and the method comprises the following steps
• providing a sheet metal blank, the thickness of the sheet metal blank being 0.5 to 3.5 mm,
• forming the sheet metal blank by a plastic molding process, wherein the first gas distributor structure (301) and the second gas distributor structure (201) are formed in such a manner, that the grooves (5) and webs (4) of the first gas distributor structure (301) are arranged complementary to the grooves (5) and webs (4) of the second gas distributor structure (201) at a predeterminable percentage of area of the air guiding surface (3) and the fuel gas guiding surface (2) of at least 50% and at most 99%, wherein the metallic interconnector (1) comprises a core (19) and a thickness of the interconnector (1) is a sum of a thickness of the core (19) and a web height (401) of the first gas distributor (301) and a web height (401) of the second gas distributor structure (201), wherein the interconnector (1) comprises a sealing surface (18), which sealing surface (18) is arranged on both the air guiding surface (3) and the fuel guiding surface (2).

2. A method according to claim 1, wherein the percentage of area of the air guiding surface (3) and the fuel gas guiding surface (2), in which the grooves (5) and webs (4) of the first gas distributor structure (301) and the grooves (5) and webs (4) of the second gas distributor structure (201) are formed complementary, is 75 to 98%, preferred 75 to 95%, particularly preferred 75 to 90%.

3. A method according to claim 1 or 2, wherein the interconnector (1) is formed as an annular disk with a disk axis (6) and an opening (7) concentric with the disk axis (6), and wherein the second gas distributor structure (201) has a first annular surface (8) concentric with the disk axis (6) and a second annular surface (9) concentric with the disk axis (6), wherein the first annular surface (8) and the second annular surface (9) are separated from each other by an annular groove (10), and the second gas distributor structure (201) has at least one direction (13) radial to the disk axis (6), wherein the first annular surface (8) and the second annular surface (9) each have at least one first radial web (11) extending along the radial direction (13).

4. A method according to claim 3, wherein the first annular surface (8) and the second annular surface (9) each have at least one second radial web (12) extending parallel to the first radial web (11).

5. A method according to anyone of the claims 1 to 4, wherein the interconnector (1) is formed as an annular disk with a disk axis (6) and an opening (7) concentric with the disk axis (6), and wherein the second gas distributor structure (201) has a first annular surface (8) concentric with the disk axis (6) and a second annular surface (9) concentric with the disk axis (6), wherein the first annular surface (8) and the second annular surface (9) are separated from each other by an annular groove (10), and the second gas distributor structure (201) has at least one direction (13) radial to the disk axis (6), and the first annular surface (8) and the second annular surface (9) each have at least one first radial groove extending along the radial direction (13).

6. A method according to claim 5, wherein the first annular surface (8) and the second annular surface (9) each have at least one second radial groove extending parallel to the first radial groove.

7. A method according to anyone of the claims 1 to 6, wherein the sheet metal blank is made of a ferritic steel with 8% ≤ chromium ≤ 40%, in particular 22% chromium, 0,05% ≤ manganese ≤ 20%, and 40% ≤ iron ≤ 91,95%.

8. A method according to anyone of the claims 1 to 7, wherein the outer diameter (14) of the sheet metal blank is 50 to 250 mm, preferred 70 to 200 mm, particularly preferred 90 to 140 mm, in particular 120 mm.

9. A method according to anyone of the claims 1 to 8, wherein the thickness of the sheet metal blank is 1.5 to 2.5 mm.

10. A method according to anyone of the claims 1 to 9, wherein the width (16) of the grooves (5) is 0.5 to 2 mm, in particular 1 mm.

11. A method according to anyone of the claims 1 to 10, wherein a multi-layer sheet metal blank is used as sheet metal blank.

12. A method according to anyone of the claims 1 to 11, wherein the sheet metal blank has an orientation element (17) at its circumference in the form of an elevation, which preferably extends perpendicular to a circumferential line of the sheet metal blank.

13. A metallic interconnector (1) for a fuel cell stack, wherein the interconnector (1) is produced from a sheet metal blank according to a method according to anyone of the claims 1 to 12, and wherein the interconnector (1) has an air guiding surface (3) with a first gas distributor structure (301) and a fuel gas guiding surface (2) with a second gas distributor structure (201), wherein the first gas distributor structure (301) and the second gas distributor structure (201) are each formed by grooves (5) and webs (4), and wherein the grooves (5) and webs (4) of the first gas distributor structure (301) are arranged complementary to the grooves (5) and webs (4) of the second gas distributor structure (201) at a predeterminable percentage of area of the air guiding surface (3) and the fuel gas guiding surface (2) of at least 75% and at most 99%, wherein the metallic interconnector (1) comprises a core (19) and a thickness of the interconnector (1) is a sum of a thickness of the core (19) and a web height (401) of the first gas distributor (301) and a web height (401) of the second gas distributor structure (201), wherein the interconnector (1) comprises a sealing surface (18), which sealing surface (18) is arranged on both the air guiding surface (3) and the fuel guiding surface (2).

14. A fuel cell stack with a metallic interconnector (1) according to claim 13.

## Revendications

1. Procédé de fabrication d'un interconnecteur métallique (1) pour une pile de cellule à combustible qui comprend une surface de guidage d'air (3) avec une première structure de répartition de gaz (301) et une surface de guidage de gaz de combustion (2) avec une deuxième structure de répartition de gaz (201), la première structure de répartition de gaz (301) et la deuxième structure de répartition de gaz (201) étant constituées chacune de rainures (5) et de nervures (4) et le procédé comprenant les étapes suivantes
• mise à disposition d'une ébauche en tôle, l'épaisseur de l'ébauche en tôle étant de 0,5 à 3,5 mm,
• formage de l'ébauche en tôle à l'aide d'un procédé de formage plastique, la première structure de répartition de gaz (301) et la deuxième structure de répartition de gaz (201) étant conçues de façon à ce que, sur une partie de surface prédéterminée de la surface de guidage d'air (3) et de la surface de guidage de gaz de combustion (2) d'au moins 75 % et de 99 % au maximum, les rainures (5) et nervures (4) de la première structure de répartition de gaz (301) sont disposées de manière complémentaires aux rainures (5) et nervures (4) de la deuxième structure de répartition de gaz (201), l'interconnecteur métallique comprenant un noyau (19) et une épaisseur de l'interconnecteur (1) étant une somme d'une épaisseur du noyau (19) et d'une hauteur de nervure (401) de la première structure de répartition de gaz (301) et d'une hauteur de nervure (401) de la deuxième structure de répartition de gaz (201), l'interconnecteur (1) comprenant une surface d'étanchéité (18), cette surface d'étanchéité (18) étant disposée aussi bien sur la surface de guidage d'air (3) et sur la surface de guidage de gaz de combustion (2).

2. Procédé selon la revendication 1, la part de surface de la surface de guidage d'air (3) et de la surface de guidage de gaz de combustion (2), pour laquelle les rainures (5) et les nervures (4) de la première structure de répartition de gaz (301) et les rainures (5) et les nervures (4) de la deuxième structure de répartition de gaz (201) sont conçues de manière complémentaires, est de 75 à 98 %, de préférence de 75 à 95 %, plus particulièrement de préférence de 75 à 90 %.

3. Procédé selon la revendication 1 ou 2, l'interconnecteur (1) étant conçu comme un disque annulaire avec un axe de disque (6) et une ouverture (7) concentrique par rapport à l'axe de disque (6) et la deuxième structure de répartition de gaz (201) comprend une première surface annulaire (8) concentrique par rapport à l'axe de disque et une deuxième surface annulaire (9) concentrique par rapport au deuxième axe de disque (6), la première surface annulaire (8) et la deuxième surface annulaire (9) étant séparées l'une de l'autre par une rainure annulaire (10) et la deuxième structure de réparation de gaz (201) comprend au moins une direction (13) radiale par rapport à l'axe de disque (6), la première surface annulaire (8) et la deuxième surface annulaire (9) comprenant chacune une première nervure radiale (11) qui s'étend le long de la direction radiale (13).

4. Procédé selon la revendication 3, la première surface annulaire (8) et la deuxième surface annulaire (9) comprenant chacune au moins une deuxième nervure radiale (12) qui s'étend parallèlement à la première nervure radiale (11).

5. Procédé selon l'une des revendications 1 à 4, l'interconnecteur (1) étant conçu comme un disque annulaire avec un axe de disque (6) et une ouverture (7) concentrique par rapport à l'axe de disque (6) et la deuxième structure de répartition de gaz (201) comprend une première surface annulaire (8) concentrique par rapport à l'axe de disque (6) et une deuxième surface annulaire (9) concentrique par rapport à l'axe de disque (6), la première surface annulaire (8) et la deuxième surface annulaire (9) étant séparées l'une de l'autre par une rainure annulaire (10) et la deuxième structure de répartition de gaz (201) comprend au moins une direction (13) radiale par rapport à l'axe de disque (6) et la première surface annulaire (8) et la deuxième surface annulaire (9) comprennent chacune une première rainure radiale qui s'étend le long de la direction radiale (13).

6. Procédé selon la revendication 5, la première surface annulaire (8) et la deuxième surface annulaire (9) comprennent chacune au moins une deuxième rainure annulaire qui s'étend parallèlement à la première rainure radiale.

7. Procédé selon l'une des revendications 1 à 6, l'ébauche en tôle étant constitué d'un acier ferritique avec 8 % ≤ chrome ≤ 40 %, plus particulièrement 22 % de chrome, 0,05 % ≤ manganèse ≤ 20 % et 40 % ≤ fer ≤ 91,95 %.

8. Procédé selon l'une des revendications 1 à 7, le diamètre extérieur (14) de l'ébauche en tôle étant de 50 à 250 mm, de préférence de 70 à 200 mm, plus particulièrement de préférence de 90 à 140 mm, plus particulièrement de 120 mm.

9. Procédé selon l'une des revendications 1 à 8, l'épaisseur de l'ébauche en tôle étant de 1,5 mm à 2,5 mm.

10. Procédé selon l'une des revendications 1 à 9, la largeur (16) des rainures (5) étant de 0,5 à 2 mm, plus particulièrement de 1 mm.

11. Procédé selon l'une des revendications 1 à 10, une ébauche en tôle multicouche étant utilisée en tant qu'ébauche en tôle.

12. Procédé selon l'une des revendications 1 à 11, l'ébauche en tôle comprenant, sur sa circonférence, un élément d'orientation (17) sous la forme d'un bossage qui s'étend de préférence perpendiculairement à une ligne de la circonférence de l'ébauche en tôle.

13. Interconnecteur métallique (1) pour une pile de cellules à combustible, l'interconnecteur (1) étant fabriqué à partir d'une ébauche en tôle selon un procédé selon l'une des revendications 1 à 12, et l'interconnecteur (1) comprenant une surface de guidage d'air (3) avec une première structure de répartition de gaz (301) et une surface de guidage de gaz de combustion (2) avec une deuxième structure de répartition de gaz (201), la première structure de répartition de gaz (301) et la deuxième structure de répartition de gaz (201) étant constituées chacune de rainures (5) et de nervures (4) et sur une part de surface pouvant être prédéterminée de la surface de guidage d'air (3) et de la surface de guidage de gaz de combustion (2) d'au moins 75 % et de 99 % maximum, les rainures (5) et les nervures (4) de la première structure de répartition de gaz (301) sont disposées de manière complémentaire aux rainures (5) et nervures (4) de la deuxième structure de répartition de gaz (201), l'interconnecteur métallique comprenant un noyau (19) et une épaisseur de 1' interconnecteur (1) étant une somme d'une épaisseur du noyau (19) et d'une hauteur de nervure (401) de la première structure de répartition de gaz (301) et d'une hauteur de nervure (401) de la deuxième structure de répartition de gaz (201), l'interconnecteur (1) comprenant une surface d'étanchéité (18), cette surface d'étanchéité (18) étant disposée aussi bien sur la surface de guidage d'air (3) que sur la surface de guidage de gaz de combustion (2).

14. Pile de cellules à combustible avec un interconnecteur métallique (1) selon la revendication 13.
